Europäisches Patentamt

European Patent Office

Office européen des brevets

(19)

(11) Veröffentlichungsnummer: **0 109 621**
**B1**

(12) # EUROPÄISCHE PATENTSCHRIFT

(45) Veröffentlichungstag der Patentschrift:
**16.08.89**

(21) Anmeldenummer: **83111266.9**

(22) Anmeldetag: **11.11.83**

(51) Int. Cl.⁴: **B 60 J 1/00**

(54) Vorrichtung zur Befestigung einer Kraftfahrzeugscheibe.

(30) Priorität: **22.11.82 DE 3243101**

(43) Veröffentlichungstag der Anmeldung:
**30.05.84 Patentblatt 84/22**

(45) Bekanntmachung des Hinweises auf die Patenterteilung:
**16.08.89 Patentblatt 89/33**

(84) Benannte Vertragsstaaten:
**DE FR GB SE**

(56) Entgegenhaltungen:
**DE-A- 2 163 390**
**DE-C- 2 723 255**
**FR-A- 1 132 649**
**US-A- 3 760 659**
**US-A- 3 851 433**

(73) Patentinhaber: **Adam Opel Aktiengesellschaft,
Bahnhofsplatz 1 Postfach 1560, D-6090 Rüsselsheim
(DE)**

(72) Erfinder: **Sprenger, Willi, Am Berghang 3,
D-6274 Wallrabenstein (DE)**

(74) Vertreter: **Rosenfeld, Jürgen, Dipl. Ing. et al, Adam Opel
Ag Patentabteilung Bahnhofsplatz 1 Postfach 17 10,
D-6090 Rüsselsheim (DE)**

## Beschreibung

Die Erfindung betrifft eine Vorrichtung zur Befestigung einer Kraftfahrzeugscheibe, insbesondere Windschutz- oder Heckscheibe, in einer Scheibenfassung, bestehend aus beidseitig der Scheibe konisch angeordneten Seitenholmen, einem Dachholm, an den Holmen ausgebildeten Halteprofilen, die die jeweils zugeordneten Scheibenkanten umgreifen und mit diesen über ein elastisches Abdichtprofil verbunden sind und die durch auf dem unteren Scheibenrand einwirkende Halteelemente festgelegt sind.

Eine derartige Befestigung einer Kraftfahrzeugscheibe in einer Scheibenfassung ist bereits bekannt (DE-C-2 723 255). Die Scheibe wird hier mit auf den Scheibenrand aufgezogener Dichtung unter Ausnutzung ihrer Konizität um ein bestimmtes Maß unterhalb ihrer Montage-Endstellung in die von den ebenfalls konisch angeordneten Seitenholmen und von dem Holm des Daches gebildeten, die Scheibenränder umfassenden Halteprofile eingesetzt und danach in ihre Endstellung nach oben verschoben und anschließend mit einem unteren Scheibenflansch befestigt. Der unter Scheibenflansch ist lösbar mit dem zugeordneten Karosserieblech verbunden und kann nach Lösen der Befestigungsmittel bzw. vor Festziehen derselben in Richtung der Scheibenebene verschoben werden. Mittels des unteren Scheibenflansches läßt sich jedoch keine einwandfreie Justierung der mit auf den Scheibenrand aufgezogenem Dichtungsprofil versehenen Scheibe in den Halteprofilen erreichen, und ein Toleranzausgleich ist schwierig.

Aufgabe der Erfindung ist es daher, die bekannte Scheibenbefestigung zu verbessern und zu vereinfachen und eine bessere Justierung der Scheibe beim Befestigen zu ermöglichen. Dies wird gemäß der Erfindung auf vorteilhafte Weise dadurch erreicht, daß die Halteelemente aus an Karosserieteilen angebrachten, dreh- und feststellbaren Exzentern bestehen, die die Scheibe nach dem Einsetzen in die Halteprofile durch Drehen in ihre Endstellung nach oben verschieben.

Mit den erfindungsgemäßen Exzentern ist eine genaue und schnelle Justierung und ein einfacher Toleranzausgleich bei der eingesetzten Scheibe möglich. Das erforderliche Drehmoment kann ermittelt und das Spezialwerkzeug zum Drehen der Exzenter darauf eingestellt werden. Auf diese Weise ist eine zeitsparende Montage der Scheibe und damit eine wirtschaftliche Massenfertigung gewährleistet.

Durch die Anbringung eines hohlzylindrischen Ansatzes am Exzenter ist in vorteilhafter Weiterbildung der Erfindung ein leichtes Einklipsen der Exzenter in die dafür vorgesehenen Öffnungen im Karosserieblech möglich. Mit Hilfe eines in den hohlzylindrischen Ansatz eintreibbaren Stiftes kann der Exzenter ohne viel Arbeitsaufwand festgeklemmt werden, so daß die Scheibe in der gewünschten Lage fixiert wird. Markierungen an den Exzentern und an der Scheibe sorgen für ein exaktes Einsetzen der Scheibe.

Hinsichtlich weiterer Ausgestaltungen und Vorteile der Erfindung wird auf die Unteransprüche sowie die Zeichnung und die zugehörige Zeichnungsbeschreibung verwiesen. In der Zeichnung ist ein Ausführungsbeispiel gemäß der Erfindung dargestellt, und zwar zeigt:

Fig. 1 die Vorderpartie eines Personenkraftfahrzeuges in Draufsicht auf die Windschutzscheibe,

Fig. 2 einen Schnitt enlang der Linie II–II in Fig. 1,

Fig. 3 eine Vorderansicht des Exzenters in seiner Ausgangsstellung beim Einsetzen der Scheibe,

Fig. 4 den Exzenter nach Fig. 3 in seiner Endmontagestellung,

Fig. 5 eine Seitenansicht des Spezialwerkzeuges zum Verdrehen des Exzenters und

Fig. 6 eine Draufsicht auf das Spezialwerkzeug nach Fig. 5.

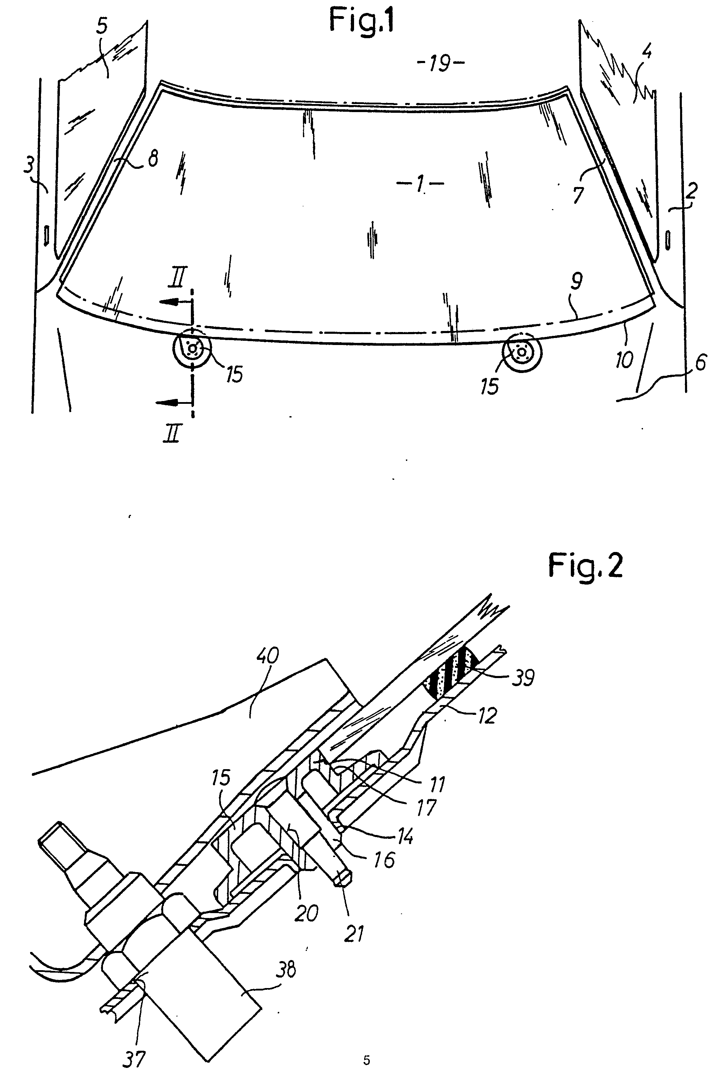

Die Windschutzscheibe ist in Fig. 1 mit 1, die Türen des Kraftfahrzeuges sind mit 2 und 3, die Seitenfenster sind mit 4 und 5 und die Motorhaube ist mit 6 bezeichnet. Einen Teil der Scheibenfassung bilden die Seitenholme 7 und 8 der Karosserie. Eine strichpunktierte Umrißlinie 9 kennzeichnet in Fig. 1 die fertig montierte Windschutzscheibe 1, während die ausgezogene Umrißlinie 10 die Lage der Scheibe 1 zu Beginn des Montagevorganges verdeutlicht.

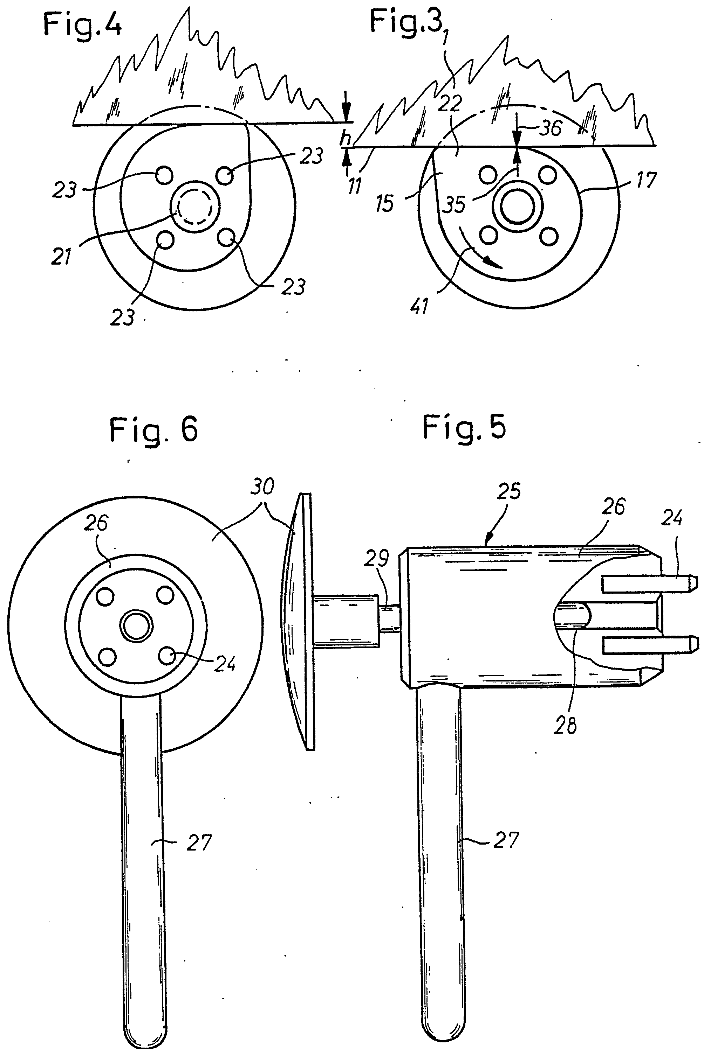

Am unteren Rand 11 der Windschutzscheibe 1 befinden sich im Karosserieblech 12 beispielsweise zwei Öffnungen 14, in die je ein Exzenter 15 mit seinem hohlzylindrischen Fortsatz 16 eingeklipst ist. Auf der Seitenfläche 17 des Exzenters 15 ruht die Unterkante 11 der Windschutzscheibe 1 auf. Die Halteprofile für die Scheibe 1 werden von den konisch angeordneten Seitenholmen 7 und 8 und vom Holm des Fahrzeugdaches 19 gebildet. Im Exzenter 15 ist eine durchgehende Bohrung 20 vorgesehen, in die ein Stift 21 zum Festklemmen des Exzenters 15 in seiner Endmontagestellung eingetrieben wird. Wie Fig. 3 erkennen läßt, ist der Exzenter 15 als Nocken 22 ausgebildet, mit dessen Hilfe die Scheibe 1 angehoben wird. Vier im Exzenter vorgesehene Ausnehmungen 23 dienen zum Einstecken der Stifte 24 des Spezialwerkzeuges 25 nach Fig. 5 und 6. Das Spezialwerkzeug 25 besteht aus einem Drehkörper 26, der mit einem Handgriff 27 versehen ist und die vier Stifte 24 zum Einstecken in die Ausnehmungen 23 des Exzenters 15 trägt. Ferner kann der Drehkörper 26 eine Einrichtung zum Einstellen des Drehmomentes, das auf den Exzenter 15 ausgeübt wird, aufweisen. Eine in Achsrichtung des Drehkörpers 26 verlaufende Bohrung 28 nimmt eine Achse 29 auf. An der Achse 29 ist ein Halteknopf 30 angebracht, der zum Halten des Drehkörpers 26 beim Drehen des Exzenters 25 dient. Eine Markierung 35 am Exzenter 15 ermöglicht bei der Montage eine genaue Ausrichtung der Scheibe 1, die an ihrem unteren Rand 11 ebenfalls eine Markierung 36 aufweist. In eine Öffnung 37 des Karosseriebleches 12 ist ein Scheibenwischermotor 38 eingesetzt. Zur Abdeckung des unteren Randes der Windschutzscheibe 1, die mit einem Kleber 39 am Karosserieblech 12 befestigt wird, dient ein Windschutzblech 40.

Bei der Montage wird die Windschutzscheibe 1 in die Halteprofile eingeschoben und anschließend die Exzenter 15 in die Öffnungen 14 des Karosseriebleches 12 in der Stellung nach Fig. 3 eigeklipst un die Markierung 35 am Exzenter 15 mit der Markierung 36 an unteren Rand 11 der Scheibe 1 zur Deckung gebracht. Dann wird der Exzenter 15 mit Hilfe des Spezialwerkzeuges 25 in Richtung des Pfeiles 41 bis in die Stellung nach Fig. 4 gedreht. Dabei wird der untere Scheibenrand 11 angehoben und die Scheibe 1 mit der auf ihrem Rand aufgezogenen Dichtung in die Halteprofile gedrückt. Die Höhe zwischen der Ausgangsstellung des unteren Scheibenrandes 11 in Fig. 3 und der Endstellung in Fig. 4 ist mit h bezeichnet. Wenn sich der Exzenter 15 in der Stellung nach Fig. 4 befindet, hat die Scheibe 1 ihre Endmontagestellung erreicht. In die Bohrung 20 wird dann ein Stift 21 zum Festklemmen des Exzenters 15 in der Öffnung 14 des Karosseriebieches 12 eingetrieben und damit die Lage der Scheibe 1 fixiert.

**Patentansprüche**

1. Vorrichtung zur Befestigung einer Kraftfahrzeugscheibe (1), insbesondere Windschutz- oder Heckscheibe, in einer Scheibenfassung, bestehend aus beidseitig der Scheibe konisch angeordneten Seitenholmen (7, 8), einem Dachholm, an den Holmen ausgebildeten Halteprofilen, die die jeweils zugeordneten Scheibenkanten umgreifen und mit diesen über ein elastisches Abdichtprofil verbunden sind und die durch auf dem unteren Scheibenrand (11) einwirkende Halteelemente (15) festgelegt sind, dadurch gekennzeichnet, daß die Halteelemente aus an Karosserieteilen (12) angebrachten, dreh- und feststellbaren Exzentern (15) bestehen, die die Scheibe (1) nach dem Einsetzen in die Halteprofile durch Drehen in ihre Endstellung (9) nach oben verschieben.

2. Vorrichtung nach Anspruch 1, dadurch gekennzeichnet, daß der Exzenter (15) zum Einklipsen in eine Öffnung (14) des Karosseriebleches (12) einen hohlzylindrischen Ansatz (16) besitzt.

3. Vorrichtung nach Anspruch 1 oder 2, dadurch gekennzeichnet, daß in den hohlzylindrischen Ansatz (16) ein Stift (21) zum Festklemmen des Exzenters (15) eingetrieben wird.

4. Vorrichtung nach Anspruch 1 bis 3, dadurch gekennzeichnet, daß der Exzenter (15) als Nokkenscheibe (22) ausgebildet und mittels eines Spezialwerkzeuges (25) drehbar ist.

5. Vorrichtung nach Anspruch 1 bis 4, dadurch gekennzeichnet, daß der Exzenter (15) Ausnehmungen (23) zum Einsetzen des Spezialwerkzeuges (25) besitzt.

6. Vorrichtung nach Anspruch 1 bis 5, dadurch gekennzeichnet, daß das Spezialwerkzeug (25) zum Drehen des Exzenters (15) aus einem mit einem Handgriff (27) versehenen Drehkörper (26) mit Stiften (24) für die Ausnehmungen (23) des Exzenters (15) besteht.

7. Vorrichtung nach Anspruch 1 bis 6, dadurch gekennzeichnet, daß der Drehkörper (26) drehbar auf eine mit einem Halteknopf (30) versehene Achse (29) aufgesetzt ist und vorzugsweise eine Einrichtung zum Einstellen des Drehmomentes aufweist.

8. Vorrichtung nach Anspruch 1 bis 7, dadurch gekennzeichnet, daß Exzenter (15) und Scheibe (1) mit Markierungen (35, 36) versehen sind.

**Claims**

1. Device for mounting a motor vehicle window, (1) in particular windscreen or rear window, in a window frame, consisting of side members (7, 8) arranged conically on both sides of the window, a roof member, and holding profiles which are formed on the frame members, encompass the respectively associated window edges, are connected to the latter by a resilient sealing profile and are fixed by holding elements (15) acting on the lower edge (11) of the window, characterised in that the holding elements consist of rotatable and lockable eccentrics (15) which are mounted on body members (12) and which displace the window (1) upwards after insertion in the holding profiles by rotation into their final position (9).

2. Device according to claim 1, characterised in that the eccentric (15) has a hollow cylindrical attachment (16) for clipping into an opening (14) in the body panel (12).

3. Device according to claim 1 or 2, characterised in that a pin (21) for locking the eccentric (15) is driven into the hollow cylindrical attachment (16).

4. Device according to claims 1 to 3, characterised in that the eccentric (15) is in the form of a cam (22) and rotatable by means of a special tool (25).

5. Device according to claims 1 to 4, characterised in that the eccentric (15) has recesses (23) for insertion of the special tool (25).

6. Device according to claims 1 to 5, characterised in that the special tool (25) for turning the eccentric (15) consists of a rotary body (26) provided with a handle (27), with pins (24) for the recesses (23) of the eccentric (15).

7. Device according to claims 1 to 6, characterised in that the rotary body (26) is mounted rotatably on a shaft (29) provided with a holding knob (30) and preferably comprises a device for adjusting the torque.

8. Device according to claims 1 to 7, characterised in that eccentric (15) and windscreen (1) are provided with markings (35, 36).

**Revendications**

1. Dispositif de fixation d'une vitre de véhicule automobile (1), en particulier un pare brise ou une lunette arrière, dans un châssis de vitre, se composant de montants latéraux (7, 8) disposés en cône des deux côtés de la vitre, d'un montant de toit, de profilés de maintien réalisés sur les montants, profilés qui entourent les arêtes de vitres qui leur sont chaque attribués respectivement, et sont reliés à celles-ci par l'intermédiaire d'un profilé d'étanchéité élastique et qui sont fixés au moyen d'éléments de maintien (15) agissant sur le bord inférieur de la vitre (11), caractérisé en ce que les éléments de maintien se composent d'excentriques (15), susceptibles de tourner et d'être bloqués, montés sur des parties de carrosserie (12), qui déplacent par rotation la vitre (1) vers le haut dans sa position finale (9), après son introduction dans les profilés de maintien.

2. Dispositif selon la revendication 1, caractérisé en ce que l'excentrique (15) possède un appendice cylindrique creux (16) pour l'encastrement dans une ouverture (14) de la tôle de carrosserie (12).

3. Dispositif selon la revendication 1 ou 2, caractérisé en ce qu'une goupille (21) est enfoncée dans l'appendice cylindrique creux (16) pour bloquer l'excentrique (15).

4. Dispositif selon les revendications 1 à 3, caractérisé en ce que l'excentrique (15) est réalisé sous forme de disque à came (22) et est susceptible d'être tourné au moyen d'un outil spécial (25).

5. Dispositif selon les revendications 1 à 4, caractérisé en ce que l'excentrique (15) possède des évidements (23) pour l'introduction de l'outil spécial (25).

6. Dispositif selon les revendications 1 à 5, caractérisé en ce que l'outil spécial (25) pour tourner l'excentrique (15) se compose d'un corps tournant (26) pourvu d'une poignée (27), avec des goupilles (24) pour les évidements (23) de l'excentrique (15).

7. Dispositif selon les revendications 1 à 6, caractérisé en ce que le corps tournant (26) est disposé tournant sur un axe (29) pourvu d'un bouton de maintien (30) et présente de préférence un dispositif pour régler le couple de rotation.

8. Dispositif selon les revendications 1 à 7, caractérisé en ce que l'excentrique (15) et la vitre (1) sont pourvus de repères (35, 36).

EP 0 109 621 B1

# Fig.1

# Fig.2

Fig.4

Fig.3

Fig. 6

Fig. 5